(19) Europäisches Patentamt
European Patent Office
Office européen des brevets

(11) **EP 1 946 197 B1**

(12) **EUROPEAN PATENT SPECIFICATION**

(45) Date of publication and mention
of the grant of the patent:
**13.12.2017 Bulletin 2017/50**

(51) Int Cl.:
***H05B 39/04*** *(2006.01)*    ***H02M 5/293*** *(2006.01)*

(21) Application number: **05799142.4**

(22) Date of filing: **11.10.2005**

(86) International application number:
**PCT/FI2005/000436**

(87) International publication number:
**WO 2007/042598 (19.04.2007 Gazette 2007/16)**

(54) **IMPROVED POWER REGULATOR AUTOMATICALLY SETTING FORWARD OR REVERSE PHASE CONTROL DEPENDING ON THE TYPE OF LOAD**

VERBESSERTER LEISTUNGSREGLER MIT AUTOMATISCHER EINSTELLUNG EINER PHASENANSCHITT- ODER PHASENABSCHNITTSTEUERUNG IN ABHÄNGIGKEIT VON DER LASTART

REGULATEUR DE PUISSANCE AMELIORE

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**23.07.2008 Bulletin 2008/30**

(73) Proprietor: **SCHNEIDER ELECTRIC INDUSTRIES SAS**
**92500 Rueil-Malmaison (FR)**

(72) Inventors:
• **HAAPAJÄRVI, Teemu**
**FI-02230 ESPOO (FI)**
• **KAIJÄRVI, Mikko**
**FI-00200 HELSINKI (FI)**
• **PORTHIN, Mikael**
**FI-02230 ESPOO (FI)**

(74) Representative: **Berggren Oy, Helsinki & Oulu**
**P.O. Box 16**
**Eteläinen Rautatiekatu 10A**
**00101 Helsinki (FI)**

(56) References cited:
**EP-A- 0 618 667**      **EP-A- 0 923 274**
**DE-A1- 10 014 251**    **DE-A1-102004 028 990**
**US-A- 5 239 255**      **US-A1- 2001 014 949**

• **PATENT ABSTRACTS OF JAPAN vol. 014, no. 533 (E-1005), 22 November 1990 (1990-11-22) -& JP 02 226820 A (MITSUBISHI ELECTRIC CORP), 10 September 1990 (1990-09-10)**

**Description**

The present invention provides an improved method for regulating an alternating voltage of an alternating current source to be supplied to a load by regulating a phase angle for the alternating voltage according to claim 1.

Further, the present invention provides an improved power regulator for regulating an alternating voltage of an alternating current source to be supplied to a load by regulating a phase angle for the alternating voltage according to claim 6. Preferred embodiments are defined in the dependent claims. Alternating current power to be switched to load is generally regulated by switching off the electric current passing through the load so that the electric power to be obtained for the load is determined by the relation of the time switched on and off for the load current and by the amplitude of the alternating voltage changing along with the time. In most alternating current applications, the switching cycle of the load current occurs once during a half period of the alternating voltage. Such an apparatus is often called a phase angle regulator. By means of the phase angle regulator it is, for example, possible to regulate light fittings, motors and electrical heating elements.

All real loads are reactive - they have a resistive, capacitive and inductive part. If the capacitive and inductive parts are very small compared with the resistive part, the load is called to be of resistive nature; a glow bulb can be given as an example. A load is called to be of capacitive nature, when it has substantial capacitance in addition to the resistive part (e.g. an electronic transformer intended for low-voltage halogen bulbs) and, respectively, loads with substantial inductance are called to be of inductive nature (for example, a motor or a transformer). In the following, a load of capacitive nature is called RC load and, respectively, a load of inductive nature is called RL load.

The current i passing through the capacitance C is generally indicated by the equation:

$$i(t) = C \cdot du/dt, \text{ in which} \tag{1}$$

u is the voltage over the capacitance C and t is time. When examining the equation 1 it can be noted that it is advantageous to regulate the RC load by using a phase angle regulator, which switches the load current during the zero-crossing point of the supply voltage. In this case, the charging current i for the capacitance C dependent on the rate of change du/dt remains low. In the following, such a regulating mode is called the reverse phase control. One apparatus using the reverse phase control, in which FET i.e. a field-effect transistor is used as the switch component, is disclosed in the international patent application WO 9322826.

The voltage u influencing over the inductance L is generally indicated by the equation:

$$u(t) = - L \cdot di/dt, \text{ in which} \tag{2}$$

i is the current through the inductance L and t is time. When examining the equation 2 it can be noted that current changes di/dt with a high rate of change cause a high voltage u over the inductance L. In order to avoid this voltage spike it is advantageous to regulate the RL load so that the load current is switched off in the zero-crossing point of the current passing through the load. In the following, such a regulating mode is called the forward phase control and the generally known triac regulator making use of this is disclosed e.g. in the American patent document US 6175195.

The above disclosed known apparatus solutions contain disadvantages and problems. A triac triggered to be conducting cannot be set to a non-conductive state before the current through the triac has fallen to zero. Thus, the known triac regulator requires a fuse for short circuit and overload protection. In electrical installations it has been noted in practice that changing an internal fuse in the apparatus is a common cause for an electrician's visit at the installation site. Thus, a fuse in a shortcircuited circuit causes extra costs for the end user of the apparatus, which often are higher than the purchase price of the apparatus.

A drawback is also that the switching speed of the triac is relatively high, and it cannot be actively adjusted. Due to the requirements for the electro-magnetic compatibility (EMC), the known triac regulator includes a choker restricting the rate of current rise to a permitted range. The said choker causes power dissipations in the power circuit, raising the temperature of the apparatus. In addition, the choker causes costs; it has a large physical size requiring a lot of space in a typical apparatus, and it has been found to disturb the end user because of its typical humming noise. The regulator based on the FET semiconductor disclosed in the patent application WO 9322826 does not necessarily contain a fuse or a choker, but it is a regulator using reverse phase control, and on the basis of the equation 2 it is thus not suitable to be used as a power regulator for a load of inductive nature.

An alternating current power regulator based on the regulation of the phase angle is previously known from the patent document US 5239255, with which both reverse phase and forward phase control can be performed. In addition, a mixed control mode (AHPC mode) can be performed with the regulator, in which both the reverse phase and the forward phase control is applied in one half cycle. The general implementation of these regulating modes in connection of a switching unit realised by means of MOSFET switches has been disclosed in the patent document. It has to be noted that the specification specially concentrates in the control of such current, voltage and temperature conditions, with which risk factors for the circuit can be detected. In this case it is thus important to detect both overvoltage and overcurrent situations. The regulator observes the voltage influencing over the load to detect overvoltage. In addition, an overcurrent sensor has been connected to a measurement resistor, which is in series with the MOSFET switches and the load.

A universal dimmer is previously known from the patent document EP 0923274, in which both the reverse phase and the forward phase control can be used in the same power regulator. This specification concentrates in detecting an inductive load and making use of the data in the selection of the regulating mode. In this connection the forward phase and the reverse phase regulating modes have been described only on a general level.

A phase angle regulator is previously known from the patent application publication US 2001014949, the regulating mode of which can be changed from the forward phase control to the reverse phase control. Overvoltage is observed over an adjustable switch arrangement, and if such is detected, it is interpreted to have been caused by an inductive load and, as the result, the normal reverse phase control will be replaced by forward phase control. Also in this publication both the forward phase and the forward phase control have been described on a general level.

A general-purpose phase angle regulator is previously known from the patent document EP 0618667, which can function either in the reverse phase or forward phase regulating mode, depending on the type of the load. The type of the load, i.e. inductive of capacitive, is determined by a test program by making use of a current impulse to be supplied to the load and by examining the current or voltage response caused by the load. Also in this case, the forward phase and the reverse phase control are known regulating modes, which have been disclosed on a general level. Patent application DE 102004028990 A1 discloses a method for automatically adjusting a controller to a load and a device for implementing the method.

The object of the invention is to offer a new improved method and apparatus, which will solve problems mentioned above, and which additionally will make possible the regulation of the alternating current power of loads of both resistive nature and capacitive and inductive nature.

The improved method of the invention for regulating the alternating current power to be supplied to load by regulating the phase angle for the alternating voltage is characterised in what is defined in claim 1. The improved power regulator of the invention is again characterised in what is defined in claim 6. The dependent claims define advantageous embodiments of the invention. Several advantages can be achieved by the invention, the most important advantage being the suitability of the method and the apparatus for the power regulation of many kinds of loads, resistive, capacitive and inductive ones.

An advantage of the invention is also that it is simple both as a method and an apparatus. In accordance with the invention, the method can be used for performing both the reverse phase and forward phase control, which are known regulating methods as such e.g. from the above mentioned patent document US-5 239 255. However, the present invention is based on the simple and distinct perception for performing both the reverse phase control and the forward phase control, in which the primary point is to start the regulation in the right half cycle by changing the state of polarity of the adjusting unit. After this, changes in the state of polarity will be performed in the next half cycles in a respective manner by the phase angle in question. In this case, the selection of the regulating mode is thus dependent on the prevailing state of polarity of the adjusting unit and on the prevailing half cycle. After this, the selected regulating mode will be automatically performed by using autocommutation.

A further advantage of the invention is that simple voltage and/or current measurements will be efficiently used in determining the type of the load, especially of the load of inductive or capacitive nature, and in selecting the appropriate regulating mode.

An advantage of the invention is that the regulating mode can most preferably be selected automatically, depending on the type of the load.

An advantage of the power regulator of the invention is that it is possible to make the apparatus so that its physical size is small in relation to its power processing capacity.

An advantage of the power regulator of the invention is that, compared e.g. with a dimmer based on the triac switch, the apparatus of the invention does not cause interference noises to be heard by human ears in its environment.

An advantage of the invention is that no separate synchronising circuit is needed in connection of it to detect the zero-crossing point of the load current and to make use of it for performing the power regulation.

An advantage of the power regulator of the invention is that autocommutation is applied to it. When applying the reverse phase control, the load current always begins substantially from zero. When applying the forward phase control, the load current is substantially switched off after the current has reached the zero level. Thus, it is not necessary to measure the load current for performing the commutation.

The invention is next explained in more detail referring to the enclosed drawings, in which

Figure 1 is a basic view of the power regulator according to the invention;

Figure 2 is a basic view of a second adjusting unit that can be applied to the power regulator of the invention;

Figure 3A illustrates the voltage of an alternating voltage source as a function of the phase angle;

Figure 3B illustrates the alternating voltage for the load as a function of the phase angle in the first regulating mode, when the load is of capacitive nature; and

Figure 3C illustrates the alternating voltage for the load and the load current as a function of the phase angle in the second regulating mode, when the load is of inductive nature;

Figure 4 illustrates the procedure for detecting the zero-crossing points for the current and, simultaneously, the overvoltage spikes;

Figure 5 is a basic view of a third adjusting unit, which can be applied to the power regulator of the invention;

Figure 6 presents an advantageous embodiment of a third adjusting unit; and

Figure 7 is a block diagram of a control unit, which can be applied to the power regulator of the invention.

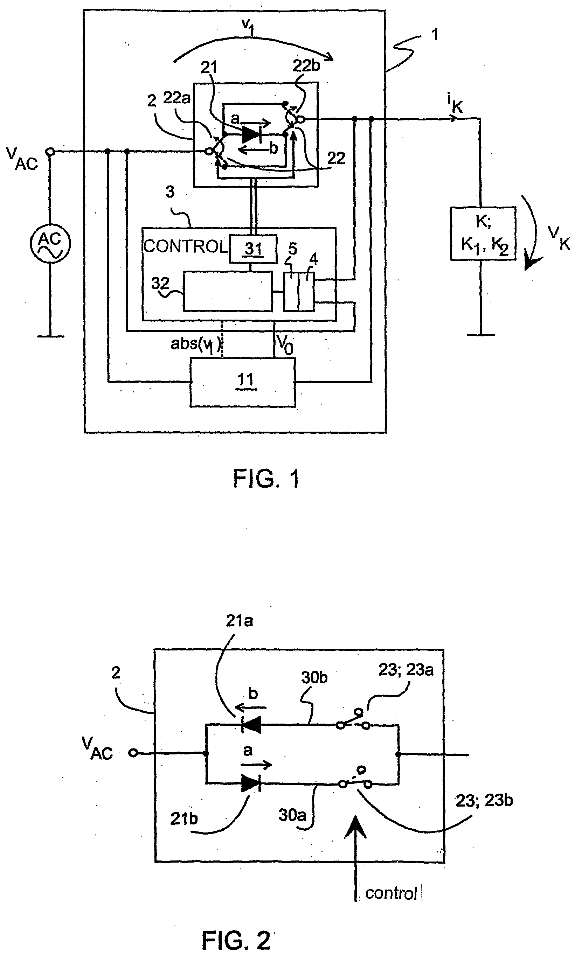

Figure 1 shows schematically a power regulator 1, by means of which a method of the invention for regulating the alternating current power to be supplied to load can be performed. The power regulator 1 includes an adjusting unit 2 for setting the phase angle, and its control unit 3. The power regulator 1 is connected in series with a load K; K1, K2. The alternating current source AC, such as the alternating current network, is connected over the series-connected power regulator 1 and the load K.

In the disclosed embodiment of the invention, the power regulator 1 further comprises a power source 11, through which the control unit 3 is supplied with suitable voltage and current. In the most preferable embodiment of the invention, the power source 11 is realised as a direct voltage source, which is connected over the adjusting unit 2. In this case, a variable (dissipation) voltage $v_1$ influencing over the adjusting unit 2 influences at the input of the power source 11, and its output has a suitable constant voltage $V_0$ for using the control unit 3.

According to the invention, the adjusting unit 2 is an electrical, especially electronic unit conducting in two optional directions a, b, such as a component or a circuit structure. The adjusting unit 2 has two optional states of polarity, in which the unit is electrically conducting in opposite directions, i.e. the forward direction a and the reverse direction b in relation to the load K.

In an advantageous embodiment of the invention, the adjusting unit 2 can be realised by means of one diode 21 and switch unit 22, as is illustrated in Figure 1. In this adjusting unit 2, the two-position switch 22a, 22b of the switch unit 22 is arranged on both sides of the diode 21. The diode 21 is arranged between the alternative connecting poles of the switches 22a, 22b so that its direction in relation to the load K changes from the forward direction a to the reverse direction b and vice versa, as the position of the switches 22a, 22b between the said connecting poles is changed.

In the most advantageous embodiment of the invention, the adjusting unit 2 can be realised by means of two diodes 21a, 21b and two switches 23a, 23b, as is illustrated in Figure 2. In this adjusting unit 2, the diodes 21a, 21b are connected in opposite directions to parallel legs 30a, 30b. In addition, the switch 23a, 23b is in series with both the diodes 21a, 21b. The switches 23a, 23b are on/off switches. They can advantageously be realised by means of semiconductor switches. The switches 23a, 23b can be realised as the switch unit 23. Alternatively, the leg 30a, 30b of the diode 21a, 21b and of the switch 23a, 23b, respectively, can be realised by means of a suitable semiconductor component, which is a semiconductor switch conducting in one direction.

In the method of the invention, two optional states of polarity are arranged for the adjusting unit 2, in which the unit is electrically conducting in opposite directions, i.e. in the forward direction a and the reverse direction b in relation to the load K. In this case, the state of polarity and the direction of conductivity a, b of the adjusting unit 2 are changed synchronically with the frequency f of the alternating current source $V_{AC}$, and in which the change in the state of polarity is performed by means of a desired phase angle $\varphi$ during the cycle P of the alternating current source. In this case, the adjusting units 2 of Figures 1 and 2 are then controlled by means of the control unit 3 by influencing the switches 22; 22a, 22b; 23; 23a, 23b by changing the positions of the switches so that either the direction of conductivity of the diode 21 is altered (Figure 1), or a selection is made between two legs 30a, 30b conducting in two opposite directions (Figure 2).

In the most advantageous embodiment of the invention, a change in the state of polarity of the adjusting unit 2 is performed by means of the desired phase angle $\varphi$; $\varphi_1$, $\varphi_2$ during the cycle P of the alternating current source AC by two regulating modes.

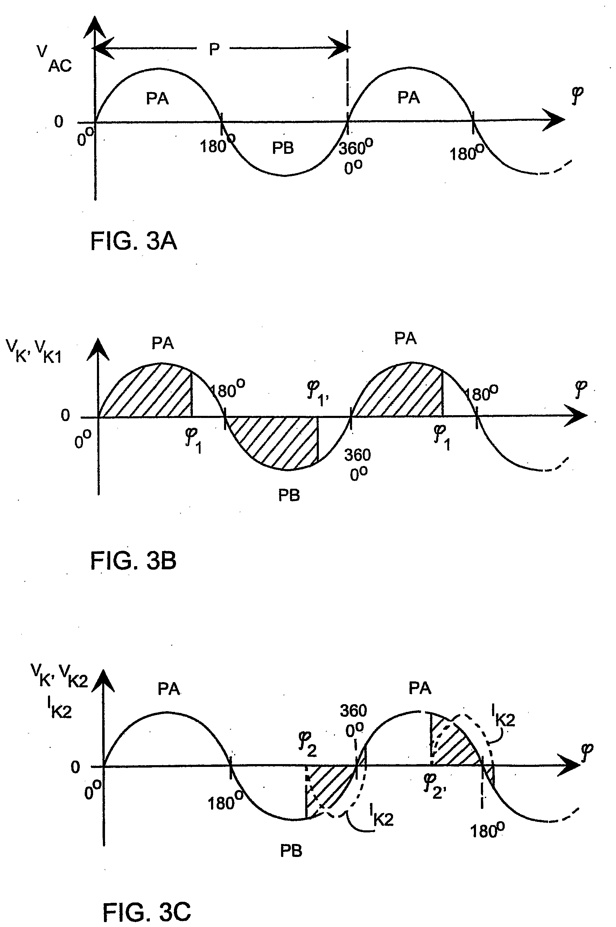

In the first regulating mode, the state of polarity of the adjusting unit 2 is changed from the forward direction a to the reverse direction b in relation to the load K, as the alternating voltage $V_{AC}$ is in the positive half cycle PA and its phase angle $\varphi$; $\varphi_1$, $\varphi_2$ is between 0 - 180 degrees. After this, changes in the state of polarity a, b are performed by phase angles $\varphi$; $\varphi_1$, $\varphi_2$ synchronised in the respective way during the next half cycles PB, PA, i.e. within intervals of 180 degrees for performing the reverse phase control. This is illustrated in Figure 3B.

It has to be noted that as the half cycle changes PB - PA, PA - PB, PB - PA,... with the phase angle of 0°, 180°, 360° = 0°, ... , the state of polarity a, b of the adjusting unit 2 is such that when the voltage for the electrical power source AC exceeds / falls below the zero level, current starts to flow from the electrical power source AC through the adjusting unit 2 to the load K; $K_1$. Thus, autocommutation occurs in relation to the input of the load current.

In the second regulating mode, the state of polarity of the adjusting unit 2 is changed from the forward direction a to the reverse direction b in relation to the load, as the alternating voltage $V_{AC}$ of the alternating current source AC is in the negative half cycle PB and the phase angle $\varphi$; $\varphi_2$ is between 180 - 360 degrees. After this, changes in the state of polarity are performed by phase angles $\varphi$; $\varphi_1$, $\varphi_2$ synchronised in a respective manner in the next half cycles PA, PB,..., i.e. within intervals of 180 degrees for performing the forward phase control. This is illustrated in Figure 3C.

It also has to be noted that as the half cycle changes PB - PA, PA - PB, ... with the phase angle of 0°, 180°, 360° = 0°, ... , the state of polarity a, b of the adjusting unit 2 is such that as the voltage for the electrical power source AC exceeds / falls below the zero level, the input of current from the electrical power source AC through the adjusting unit 2 to the load K; $K_2$ ends. Thus, autocommutation occurs in relation to the switching off of the load current.

The facts disclosed above are true in relation to the input of current only when the load K is resistive. If the load K; $K_2$ is of inductive nature, the input of current $i_{K2}$ to the load ends temporally after the voltage $V_{AC}$ for the electrical power source AC has exceeded / fallen below the zero level as the current has reached the zero level. It has to be noted that, due to the inductive load, the current and voltage have phase-shifted in relation to each other, and thus the zero-crossing point for the load current $i_{K2}$ is lagging in relation to the zero-crossing point for the load current $V_{K2}$, as is illustrated in Figure 3C.

The first regulating mode is primarily applied to supplying alternating current power to a RC load, i.e. to the load $K_1$ of capacitive nature. The second regulating mode is primarily applied to supplying alternating current power to a RL load, i.e. to the load $K_2$ of inductive nature. Both regulating modes are also applicable to the power regulation of loads of resistive nature. The positive half cycle PA and the negative half cycle PB of the alternating voltage $V_{AC}$ for the alternating current source AC are identified by means of the voltage $v_1$ with a momentary influence and measured over the adjusting unit 2. Even the polarity (+ or -) of the voltage indicates directly the type PA, PB of the half cycle. In addition, the state of polarity a, b of the adjusting unit 2 can be taken into account in the identification of the half cycle.

The half cycle of the alternating voltage is positive PA, when the state of polarity of the adjusting unit 2 is in the forward direction a and a low positive (dissipation) voltage $v_1$ is measurable over the adjusting unit 2. In this case, the current $i_K$ travels directly towards the load K. Respectively, the half cycle of the alternating voltage is positive PA, when the state of polarity of the adjusting unit 2 is in the reverse direction b and the voltage $v_1$ equivalent to the alternating voltage $V_{AC}$ over the adjusting unit 2 is positive (seen from the side of the alternating current source AC).

Again, the half cycle of the alternating voltage is negative PB, when the state of polarity of the adjusting unit 2 is in the forward direction a and the voltage $v_1$ equivalent to the alternating voltage $V_{AC}$ over the adjusting unit 2 is negative (seen from the side of the alternating current source AC). Respectively, the half cycle of the alternating voltage is negative PB, when the state of polarity of the adjusting unit 2 is in the reverse direction b and a low negative (dissipation) voltage $v_1$ prevails over the adjusting unit (i.e. current flows from the load towards the alternating current source).

The advantage of the process for identifying the half cycle disclosed above is that no separate coupling is needed for measuring the half cycle, but the already existing measurement coupling, i.e. the measurement of voltage over the adjusting unit 2 and the measurement data obtained directly by means of it are used.

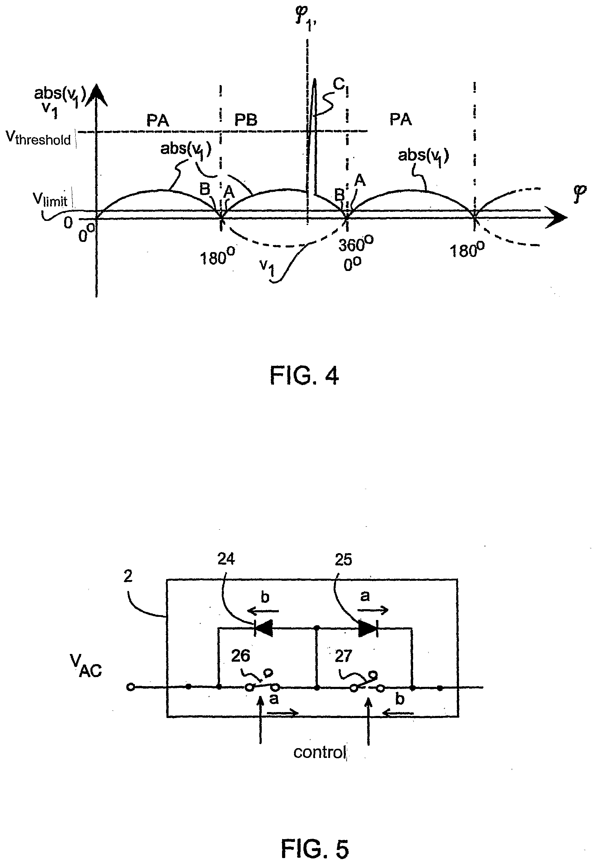

The changing of the current $i_1$ flowing through the adjusting unit 2 and, simultaneously, of the load current $i_k$ according to half cycles PA, PB and thus the determination of the zero-crossing points for the current is necessary for the reliable realisation of the regulation and thus for the determination of the phase angles $\varphi$; $\varphi_1$, $\varphi_1'$; $\varphi_2$, $\varphi_2'$. The change in the direction of current is most preferably indicated by using the power source 11. A variable direct voltage $abs(v_1)$ is available from the power source, especially the output of its rectifier unit, thus following with a positive value the voltage $v_1$ over the adjusting unit 2. In addition, the reference voltage $v_{limit}$ will be set in advance, which is a direct voltage and the value of which is positive and near the zero level. The change situation in the direction of current and the respective zero-crossing point for the current is determined by comparing the voltages $abs(v_1)$ and $v_{limit}$ with each other. When the voltage $abs(v_1)$ exceeds and/or falls below the value for the reference voltage $v_{limit}$, the zero-crossing point for the current $i_1$ flowing through the adjusting unit 2 and, simultaneously, for the load current $i_k$ is in the vicinity of this point or points A, B, most preferably in the middle of the area between the points A, B, or at least in the middle area. This situation is illustrated in Figure 4.

It is simple and advantageous to provide the regulation method of the invention with an automatic identification of the load type, i.e. RC and/or RL load, on the basis of which it is additionally possible to choose the preferable regulating mode in accordance with the load type.

Let it be assumed that the load K is an RC load, i.e. the load $K_1$ of capacitive nature. Adjusting the alternating current power will be started with the first regulating mode. After this, the voltage $v_1$ prevailing over the adjusting unit 2 is measured and observed so that the measurement values are compared with the value for the preset second reference voltage $v_{threshold}$. If the voltage influencing over the adjusting unit is observed to momentarily exceed the value for the second reference voltage $v_1 > v_{threshold}$, the exceeding is interpreted as an overvoltage spike caused by the load of inductive nature $K_2$, i.e. RL load, and the regulating mode is changed from the first regulating mode to the second. The value for the voltage $v_1$ varies both in the positive and negative area so that also the second reference voltage $v_{threshold}$ has both a positive and negative polarity. Exceeding the reference voltage $v_{threshold}$ can occur both in the positive and negative direction.

A variable direct voltage $abs(v_1)$ is available from the power source, especially the output of its rectifier unit, as was stated above in connection of the determination of the zero-crossing points for the current. It is advantageous to use this direct voltage also in the automatic identification of the load type. In this case, the direct voltage $abs(v_1)$ is compared with the second reference voltage $v_{threshold}$. If it is observed that the rectified voltage $abs(v_1)$ momentarily exceeds the value for the reference voltage $abs(v_1) > v_{threshold}$, the exceeding is interpreted as an overvoltage spike C caused by the load $K_2$ of inductive nature, i.e. RL load, and the regulating mode is changed from the first regulating mode to the second. However, it is preferable to observe the exceeding of the value for the reference voltage, i.e. $abs(v_1) > v_{threshold}$ at least twice or even more often before making the above mentioned decision and changing the regulating mode.

The above disclosed occurrence of the overvoltage spike C is illustrated in Figure 4. The advantage of this procedure is that it is possible to use only the one value for the reference voltage, i.e. the positive reference value $v_{threshold}$ and the negative value for the reference voltage will not be needed. When the voltage $v_1$ prevailing over the adjusting unit 2 is rectified as the voltage $abs(v_1)$, one positive value for the reference voltage $v_{threshold}$ will be sufficient.

Let it be assumed that the load K is an RL load, i.e. the load $K_2$ of inductive nature, in which case the regulation of the alternating current power will be started with the second regulating mode. After this, the current $i_1$ flowing through the adjusting unit 2 (and simultaneously the load current $i_k$) is measured and observed so that the measurement values are compared with the preset limit value for the current $v_{threshold}$. If it is observed that the measured current flowing through the adjusting unit momentarily exceeds the limit value for the current $i_1 > i_{threshold}$, the exceeding is interpreted as an overcurrent spike caused ty the load $K_1$ of capacitive nature, and the regulating mode is changed from the second regulating mode to the first. However, it is preferable to observe the exceeding of the limit value for the current $i_1 > I_{threshold}$ at least twice or even more often before making the above disclosed decision and changing the regulating mode.

In the above disclosed methods for identifying the load type, the voltage $v_1$ prevailing over the adjusting unit 2 and, respectively, the current $i_1$ flowing through it are measured by measuring circuits or couplings that are separate in relation to the control unit and that can be combined as a suitable measuring unit. The measurement of the current $i_1$, which thus corresponds to the measurement of the load current $i_k$ can, in an advantageous embodiment, be performed by using an overcurrent protection circuit in the following way.

The current $i_1$ flowing through the adjusting unit 2 and thus, simultaneously, the load current $i_k$ are measured and observed by means of such an overcurrent protection circuit, to which a predefined overcurrent limit $i_{overcurrentlimit}$ has been set. The overcurrent protection circuit functions in a known way so that as the predefined overcurrent limit set for the current to be supplied to the load is exceeded, the input of current supply from the alternating current source AC to the load K will be switched off, and alarm data will possibly be given. In the method according to the invention for identifying the load type the overcurrent protection circuit can be used so that as the current $i_1$ flowing through the adjusting unit 2 is observed to exceed the overcurrent limit set in connection to the overcurrent protection circuit, $i_1 > i_{over-currentlimit}$, this is interpreted as an overcurrent spike caused by the load $K_1$ of a capacitive nature. After this, the prevailing regulating mode is first changed from the second regulating mode to the first, after which it is examined again by using the overcurrent protection circuit, if the current flowing through the adjusting unit exceeds the overcurrent limit set in connection of the overcurrent protection circuit, and if the overcurrent limit is not exceeded, the operation is continued with the just set regulating mode, and if the overcurrent limit is exceeded, the overcurrent protection is triggered in a known way. Also in this case it is advantageous to observe the exceeding of the set overcurrent limit $i_1 > i_{overcurrentlimit}$ at least twice or even more often before making the above disclosed decision and changing the regulating mode.

The overcurrent circuit or similar current measuring circuit usually includes a small measurement resistor, which is in series with the adjusting unit 2 or, alternatively, the measuring resistor is an element in the adjusting unit so that the current $i_1$ flowing through it and the load current $i_K$, respectively, are measured. Through the measuring resistor, the measurement of the current can be changed to the measurement of the voltage $v_{measuringresistor}$ over the resistor, which is then compared with the voltage limit $v_{overcurrentlimit}$ equivalent with the overcurrent limit $i_{overcurrentlimit}$. In this case it is possible to apply the same principle as disclosed above, when it was assumed that the load K is an RC load in the initial situation.

The improved power regulator 1 of the invention for regulating the alternating current power to be supplied to the load K by regulating the phase angle φ of the alternating voltage $V_{AC}$ has been shown schematically in Figure 1. The power regulator 1 comprises the adjusting unit 2 for setting the phase angle φ and its control unit 3, as was previously stated above. Further, the power regulator 1 most preferably comprises the power source 11. The regulating methods previously disclosed are performed in the power regulator 1.

According to the invention, the adjusting unit 2 is an electric, especially electronic unit conducting in two optional directions a, b, and having two optional states of polarity, in which the unit is electrically conducting in opposite directions, i.e. in the forward direction and the reverse direction a, b in relation to the load. The most preferable embodiments of the adjusting unit 2 have been handled in the specification above, and they are shown in Figures 1 and 2.

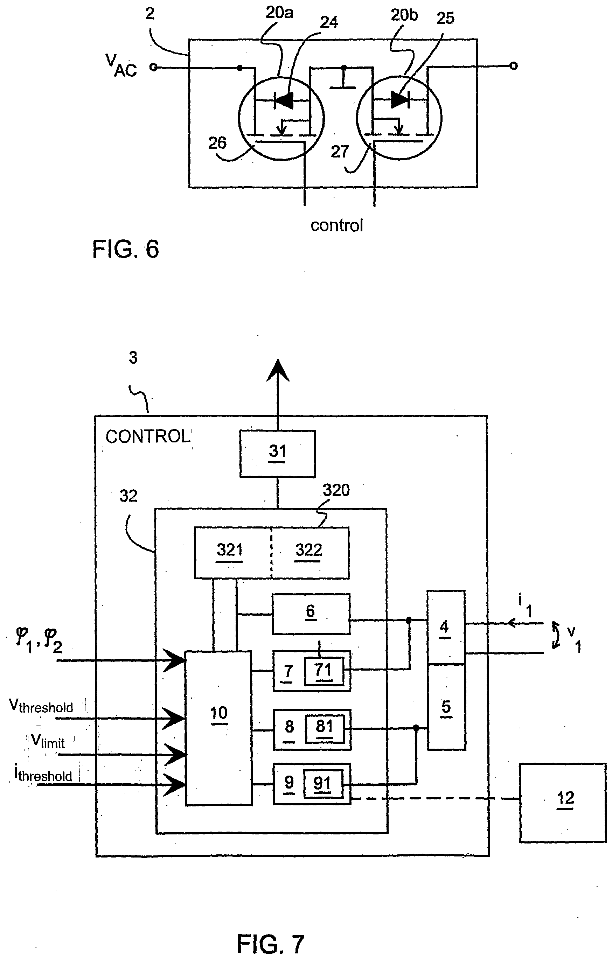

Alternative advantageous embodiments of the adjusting unit 2 are illustrated in Figures 5 and 6.

In Figure 5, the adjusting unit 2 has been realised by means of two diodes 24, 25 of opposite directions and a switch unit with two on/off switches 26, 27. The switches 26, 27 are arranged parallel to the diodes 24, 25 and connected over them. The switches 26, 27 are alternately controlled on and off so that either one of the diodes with opposite directions are connected between the alternating current source AC and the load.

Figure 6 shows an advantageous and practical implementation for the adjusting unit 2. In this case, the adjusting unit 2 has been made of two sequentially connected MOSFET power transistors 20a, 20b. Alternatively, it is possible to use other power transistors instead of the MOSFETs, such as IGBT or a bipolar transistor.

In the adjusting unit 2 in Figure 6, the MOSFET power transistors 20a, 20b are connected in series so that their sources have been connected together and further to the virtual ground VM of the power regulator 1. In this case, the drain of the first MOSFET transistor 20a is the input pole for the adjusting unit 2, and it is connected to the alternating current source AC. The drain of the second MOSFET transistor 20b is the output pole for the adjusting unit 2, and will be connected to the load K. Each MOSFET transistor includes the actual transistor switch, which corresponds to the switches 26, 27 of the adjusting unit 2 in Figure 5, and further, a diode parallel to it and built in connection to the transistor, a so-called body diode 24, 25, which is fitted in the forward direction between the source and the drain. The MOSFET transistors 20a, 20b are controlled by means of control voltages supplied to their gate terminals from the control unit 3 alternately to the electrically conducting, i.e. off state and, respectively, to the non-conducting, i.e. on state during the half period of each input voltage or alternating voltage $V_{AC}$ in the way disclosed above.

According to the invention, the control unit 3 comprises a change unit 31 and a phase angle unit 32. The change unit 31 is, for example, the control device for the switch unit 22; 23, with which the changing of the state of polarity of the adjusting unit 2 and thus the direction of conductivity a, b will be ultimately carried out. The phase angle unit 32 is used for controlling the realisation of the change in the state of polarity a, b of the adjusting unit 2 repeatedly with the desired phase angle $\varphi$; $\varphi_1$, $\varphi_1'$; $\varphi_2$, $\varphi_2'$ during the period of 360 degrees of the alternating current source and synchronically according to the frequency f of the alternating current source $V_{AC}$. In the next description of the control unit 3, reference is especially made to Figure 7.

In the most advantageous embodiment of the invention, the phase angle unit 32 includes a phase angle regulating unit 320, which is arranged to function in two areas of operation as a first and a second regulating unit 321, 322, respectively. In addition, the phase angle unit 32 has the central controller 10 for controlling and monitoring the operation of the regulating unit 320; 321, 322.

The first regulating unit 321 is arranged to change the state of polarity a, b of the adjusting unit 2 by means of the change unit 31 in the first regulating mode so that the state of polarity of the adjusting unit 2 will be changed from the forward direction a to the reverse direction b in relation to the load K, when the alternating voltage $V_{AC}$ of the alternating current source is in the positive half cycle PA and its phase angle $\varphi$; $\varphi_1$ is between 0 - 180 degrees, after which changes in the state of polarity will be carried out in a respective way with the phase angles $\varphi$; $\varphi_1$, $\varphi_1'$ during the following half cycles for performing the reverse phase control.

The second regulating unit 322 is arranged to change the state of polarity a, b of the adjusting unit 2 by means of the change unit 31 so that the state of polarity of the adjusting unit 2 will be changed from forward a to reverse b in relation to the load, when the alternating voltage $V_{AC}$ of the alternating current source is in the negative half cycle PB and the phase angle $\varphi$; $\varphi_2$ is between 180 - 360 degrees, after which changes in the state of polarity will be carried out in a respective way with the phase angles $\varphi$; $\varphi_2$, $\varphi_2'$ during the next half cycles for performing the forward phase control.

Concerning the regulating unit 320; 321, 322 of the phase angle, reference is made to Figures 3A, 3B and 3C, and to the description of the regulating method disclosed above.

In an advantageous embodiment of the invention, a voltage-measuring unit 4 is provided in connection with the control unit 3 for measuring the voltage $v_1$ influencing over the adjusting unit 2. In the most advantageous embodiment the power source 11 and the voltage abs ($v_1$) obtained from it are used, as is disclosed above. This voltage data is used in the control unit 3, especially in the phase angle unit 32 for controlling the adjusting unit 2 to realise the method of invention disclosed above.

The control unit 3 has an identification unit 6 for the half cycle PA, PB of the alternating current source AC, in which the positive half cycle PA and the negative half cycle PB of the alternating voltage $V_{AC}$ are identified. The measuring data on the voltage $v_1$ are supplied to this identification unit 6 from the measuring unit 4 and, further, the identification unit 6 is provided with data on the state of polarity a, b of the adjusting units. In the identification unit 6, the prevailing half cycle PA or PB is determined on the basis of the state of polarity a, b of the adjusting units, which is then signalled to the central controller 10. The method for identifying the half cycle has been disclosed above. Let it be stated that the data on the state of polarity a, b is not necessary for determining the half cycle; it is only used for verifying the result. Data on the half cycle is needed for controlling the phase angle unit 320, as has been disclosed above. The control unit 3 controls and decides on the basis of the type of the half cycle PA, PB on the change direction of the state of polarity a, b of the adjusting unit 2 so that connecting current to the load occurs in a desired way.

In a second advantageous embodiment of the invention, the control unit 3 has an inductive load identification unit 7. Most preferably, this unit includes a voltage comparison unit 71 for comparing the measured voltage value $v_1$ with the predetermined limit value $v_{threshold}$ for the voltage, the exceeding of which is interpreted as an indication of the load $K_2$ of inductive nature. It has to be noted that the value for the voltage $v_1$ is both positive and negative so that also the limit value $v_{threshold}$ for the voltage is both positive and negative. The exceeding, either in the positive or negative direction, is signalled to the central controller 10. The change in the regulating mode is performed from the first regulating mode to the second is performed on the basis of this, in which case the regulation of the phase angle is transferred from the one operation area of the regulating unit 320 of the phase angle to the second, i.e. from the first regulating unit 321 to the second regulating unit 322.

Most preferably, the power source 11 is used in the identification unit 7 for an inductive load. The variable direct voltage abs($v_1$) is available from the output of the rectifying unit of the power source, as has been disclosed above. This direct voltage can be used in the automatic identification of the load type. In the identification unit 7, the direct voltage abs($v_1$) is compared with the predetermined second voltage limit value $v_{threshold}$ in a suitable comparator. If the rectified voltage abs($v_1$) influencing over the adjusting unit is momentarily observed to exceed the limit value, i.e. abs($v_1$) > $V_{threshold}$, the exceeding is interpreted as an overvoltage spike caused by the load $K_2$ of inductive nature, i.e. RL load, and the regulating mode is changed from the first regulating mode to the second.

In the above-disclosed embodiments of the invention, in which the identification unit 7 for an inductive load is used, it is preferable that the said exceeding of the voltage value, such as abs($v_1$) > $v_{threshold}$ is observed at least twice or even more often before making the above-mentioned decision and changing the regulating mode. For this purpose, the identification unit 7 can be provided with a suitable counter, to which an integral number value is set, after the exceeding of which the change in the regulating mode will be performed.

In a third advantageous embodiment of the invention a current measuring unit 5 is provided in connection with the control unit 3 for measuring the current $i_1$ flowing through the adjusting unit 2. This current data is used in the control unit 3, especially in the phase angle unit 32, for controlling the adjusting unit 2. The measuring of the current can be changed to the measuring of the voltage occurring over the measuring resistor or a respective standard resistor, as has been disclosed above in connection with the overcurrent protection. Thus, the measuring arrangements can be simplified by resetting the measurements to voltage measurements.

In a fourth advantageous embodiment of the invention, the control unit 3 most preferably includes a transition sensor 8. In one embodiment of the invention, this includes a first comparison unit 81, in which the consecutive measured current values are measured. The change in direction of the current $i_1$ and, simultaneously, of the load current $i_K$ is noticed on the basis of the comparison (from positive to negative and vice versa, when the measured current values change respectively). The observed change in the direction of current and especially its moment of change is signalled to the phase angle unit 32, especially to the central controller 10 for performing the synchronisation of the control of the phase angle $\varphi$ on the basis of consecutive zero-crossing points for the load current.

In a variation of the fourth embodiment of the invention, the change in the direction of current is most preferably indicated by using the power source 11. In this case, the comparison of the successive measured current values is performed in the first comparison unit 81 of the transition sensor 8. The variable direct current abs($v_1$) can be obtained from the power source, especially from the output of its rectifying unit. In addition, a predetermined limit value has been set as the reference voltage $v_{limit}$ to the transition sensor 8, the limit value being a direct voltage, the value of which is positive and near the zero level. The situation of change in the direction of current and the respective zero-crossing point for the current is determined so that the voltages abs($v_1$) and $v_{limit}$ are compared with each other. When the voltage abs($v_1$) exceeds and/or falls below the value for the reference voltage $v_{limit}$, the zero-crossing point for the current $i_1$ flowing through the adjusting unit 2 and, simultaneously, for the load current $i_K$ is in the vicinity of this point or points A,B, preferably in the middle area.

The zero-crossing point data concerning the current $i_1$ and, at the same time the load current $i_K$ is used in a way known in itself in the control unit 3, especially the phase angle unit 32, for controlling the adjusting unit 2. The zero-crossing point for the current is equivalent to the phase angle $\varphi = 0$. In the control unit 3, the moment of change in the state of polarity a, b of the defined diode 21; 21a, 21b to the control unit 3 is calculated on the basis of this by using the phase angle data $\varphi; \varphi_1, \varphi_2$ supplied from outside.

In a fifth advantageous embodiment of the invention, the control unit 3 has an identification unit 9 for capacitive load. This unit include a second comparison unit 91, with which each measured current value $i_1$ is compared with the predetermined current limit value $i_{threshold}$, the exceeding of which is interpreted as an indication of the load $K_1$ of capacitive nature. However, it is advantageous to state the exceeding of the current limit value $i_1 > i_{threshold}$ at least twice or even more often before making the above-disclosed decision and changing the regulating mode. For this purpose, the identification unit 9 can be provided with a suitable counter, to which an integral number value is set, the exceeding of which is observed with suitable monitoring means and the change in the regulating mode is performed after this.

In an adapted embodiment of the fifth embodiment of the invention, the method for identifying the load type and especially in connection with the identification unit 9 for the capacitive load it is advantageous to use an overcurrent protection circuit 12, which in the embodiment shown is connected to the identification unit 9 in question. In this case, the current $i_1$ flowing through the adjusting unit 2 is observed by the overcurrent protection circuit 12. When it is observe that the current $i_1$ exceeds the overcurrent limit $i_1 > i_{overloadlimit}$ set in connection to the overcurrent protection circuit, this is interpreted as an overcurrent spike caused by the load $K_1$ of capacitive nature. Also in this embodiment it is advantageous to observe the exceeding of the current limit value $i_1 > i_{threshold}$ at least twice or even more often before making the decision and changing the regulating mode. Also in this case, the identification unit 9 preferable has a suitable counter for calculating the spikes and for observing the exceeding of the integral number value. If the current $i_1$ still exceeds the overcurrent limit after changing the regulating mode, the overcurrent protection circuit functions according to its actual task and triggers the protection mechanism.

The exceeding of the current limit value $i_{threshold}$ is signalled to the phase angle unit 32, especially to the central controller 10, and the change in the regulating mode is performed from the second regulating mode to the first on the basis of this so that the regulation of the phase angle is transferred in the phase angle regulating unit 320 from one area of operation to the other, i.e. from the second regulating unit 322 to the first 321.

The identification unit 9 for the capacitive load and its comparison unit 91 can be changed from the comparison unit for current values to the comparison unit for the respective voltage values. In this case, the same parts can be applied in this identification unit 9 as in the identification unit 7 for an inductive load.

It is advantageous to realise the control unit 3, especially the phase angle unit 32; 320; 321, 322 with its related sub-units of a microcontroller or a respective data processing unit, to which the sub-units (the voltage measuring units and possible current measuring units excluded) are realised as programmatic units. In this case, the measured current and/or voltage values are converted into a digital format by suitable A/D converters.

## Claims

1. An improved method for regulating an alternating voltage ($V_{AC}$) of an alternating current source to be supplied to a load (K) by regulating a phase angle ($\varphi$), which is applied to a power regulator (1) having an adjusting unit (2) for setting the phase angle ($\varphi$) and its control unit (3), in which method the phase angle can be regulated in two alternative ways for performing a reverse phase control and a forward phase control, respectively, wherein two optional states of polarity are arranged for the adjusting unit (2), in which the unit is electrically conducting in opposite directions, i.e. in the forward direction and the reverse direction (a, b) in relation to the load, the state of polarity of the unit and thus the direction of conductivity (a, b) is changed synchronically with the frequency (f) of the alternating current source ($V_{AC}$) and the change in the state of polarity is performed with a desired phase angle ($\varphi$; $\varphi_1$, $\varphi_2$) during the cycle (P) of the alternating electric source so that

   - the state of polarity of the adjusting unit (2) is changed from the forward direction (a) to the reverse direction (b) in relation to the load (K) for performing the reverse phase control, when the alternating voltage ($V_{AC}$) of the alternating current source is in the positive half cycle (PA) and its phase angle ($\varphi$; $\varphi_1$, $\varphi_2$) is between 0 - 180 degrees, after which the changes in the state of polarity will be performed in a respective way in the next half cycles; and
   - the state of polarity of the adjusting unit (2) is changed from the forward direction (a) to the reverse direction (b) in relation to the load for performing the forward phase control, when the alternating voltage ($V_{AC}$) of the alternating current source is in the negative half cycle (PB) and the phase angle ($\varphi$; $\varphi_1$, $\varphi_2$) is between 180 - 360 degrees, after which changes in the state of polarity will be performed in a respective way in the next half cycles,

   **characterised in that**
   the positive (PA) and negative (PB) half cycle of the alternating voltage ($V_{AC}$) of the alternating current source are identified by means of the momentarily influencing voltage ($v_1$) measured over the adjusting unit (2).

2. An improved method according to claim 1, **characterised in that** the zero-crossing points for the load current ($i_K$) are determined so that a variable direct voltage abs($v_1$), which is set to follow the voltage ($v_1$) prevailing over the

adjusting unit (2) with a positive value, is compared with a predetermined reference voltage ($v_{limit}$), which is a direct voltage and the value of which is positive and near the zero level, so that when the variable direct voltage $abs(v_1)$ exceeds and/or falls below the value for the reference voltage ($v_{limit}$), a zero-crossing point (A, B) for the load current ($i_K$) will be in the vicinity of this zero-crossing point (A, B).

3. An improved method according to a claim 1 or 2, **characterised in that** the voltage ($v_1$) prevailing over the adjusting unit (2) is measured and monitored so that the measuring values are compared with a preset second reference voltage ($v_{thresh-old}$), and if it is observed that the voltage influencing over the adjusting unit momentarily exceeds the preset second reference voltage ($v_1 > v_{threshold}$), the exceeding is interpreted as an overvoltage spike caused by the load ($K_2$) of inductive nature, and the regulating mode will be changed from the reverse phase regulating mode to the forward phase regulating mode.

4. An improved method according to any of the preceding claims, **characterised in that** the current ($i_1$) flowing through the adjusting unit (2) and, at the same time, the load current ($i_K$) is measured and observed so that the measuring values are compared with a predetermined current limit value ($v_{threshold}$), and if it is observed that the measured current flowing through the adjusting unit momentarily exceeds the current limit value ($i_1 > i_{threshold}$), the exceeding is interpreted as an overcurrent spike caused by the load ($K_1$) of capacitive nature, and the regulating mode will be changed from the forward phase regulating mode to the reverse phase regulating mode.

5. An improved method according to claim 4, **characterised in that** the current ($i_1$) flowing through the adjusting unit (2) and, at the same time, the load current ($i_K$) is measured and observed by means of such an overcurrent protection circuit (12), to which a predetermined overcurrent limit ($i_{overcurrentlimit}$) is set so that when the current flowing through the adjusting unit is observed to exceed the overcurrent limit ($i_1 > i_{overcurrentlimit}$), this is interpreted as an overcurrent spike caused by the load ($K_1$) of capacitive nature, and the prevailing regulating mode is changed from the forward phase regulating mode to the reverse phase regulating mode, after which it will be again examined by means of an overcurrent protection circuit, whether the current flowing through the adjusting unit exceeds the predetermined overcurrent limit set in connection to the overcurrent protection circuit, and if the overcurrent limit is not exceeded, the just set reverse phase regulating mode will be maintained, and if the overcurrent limit is exceeded, the overcurrent protection is triggered in a known way.

6. An improved power regulator for regulating an alternating voltage ($V_{AC}$) of an alternating current source to be supplied to a load (K) by regulating a phase angle ($\varphi$), the power regulator (1) comprising an adjusting unit (2) for setting the phase angle ($\varphi$) and its control unit (3), the phase angle in the power regulator being adjustable by means of the control unit in two alternative ways for performing a reverse phase and a forward phase control, respectively, wherein

a) the adjusting unit (2) is a unit electrically conducting in two optional directions with two optional states of polarity, in which the adjusting unit is electrically conducting in opposite directions, i.e. the forward direction and the reverse direction (a, b) in relation to the load,
b) the control unit (3) comprises:

- a change unit (31) for changing the state of polarity of the adjusting unit (2) and thus the direction of conductivity (a, b) synchronically with the frequency (f) of the alternating voltage ($V_{AC}$) of the alternating current source, and
- a phase angle unit (32) for repeatedly performing a change in the state of polarity (a, b) in the adjusting unit (2) with a desired phase angle ($\varphi$; $\varphi_1$, $\varphi_2$) during a cycle of 360 degrees of the alternating current source, the phase angle unit (32) including a phase angle regulating unit (320), which is arranged to function in two areas of operation as first and second phase angle regulating units (321, 322), and a central controller (10) for controlling and monitoring the operation of the regulating unit (320; 321, 322), so that

-- the first phase angle regulating unit (321) is arranged to change the state of polarity (a, b) of the adjusting unit (2) by means of the change unit (31) in a first regulating mode so that the state of polarity of the adjusting unit (2) is changed from the forward direction (a) to the reverse direction (b) in relation to the load (K), when the alternating voltage ($V_{AC}$) of the alternating current source is in the positive half cycle (PA), and its phase angle ($\varphi$; $\varphi_1$, $\varphi_2$) is between 0 - 180 degrees, after which changes in the state of polarity will be performed in a respective way in the next half cycles for performing the reverse phase control, and
-- the second phase angle regulating unit (322) is arranged to change the state of polarity (a, b) of the adjusting unit (2) by means of the change unit (31) in a second regulating mode so that the state of polarity of the adjusting unit (2) is changed from the forward direction a to the reverse direction b in relation to the load, when the alternating voltage ($V_{AC}$) of the alternating current source is in the negative half cycle (PB), and the phase angle ($\varphi$; $\varphi_1$, $\varphi_2$) is between 180 - 360 degrees, after which changes in the state of polarity will be performed in a respective way in the next half cycles by performing the forward phase control,

**characterised in that**

in connection with the control unit (3) there is provided a voltage measuring unit (4) for measuring the voltage ($v_1$) influencing over the adjusting unit (2), the voltage data being used in the control unit (3), especially in the phase angle unit (32), for controlling the adjusting unit (2).

7. An improved power regulator according to claim 6, **characterised in that** the adjusting unit (2) is realised by means of at least one diode (21) and a switch unit (22; 22a, 22b).

8. An improved power regulator according to claim 6, **characterised in that** the adjusting unit (2) is realised by means of two diodes (21a, 21b) and two switches (23a, 23b), the diodes being connected in opposite directions and in series with the switches to parallel legs (30a, 30b).

9. Improved power regulator according to claim 6, **characterised in that** the adjusting unit (2) is realised by means of two diodes (24, 25) of opposite directions and two on/off switches (26, 27), the switches being arranged parallel to the diodes.

10. An improved power regulator according to claim 9, **characterised in that** the adjusting unit (2) is made of two consecutively connected MOSFET power transistors (20a, 20b).

11. An improved power regulator according to any of the preceding claims 6 - 10, **characterised in that** the control unit (3) has an identification unit (6) for the half cycle (PA, PB) of the alternating current source (AC), in which the positive (PA) and negative (PB) half cycle of the alternating voltage ($V_{AC}$) is identified, the prevailing half cycle being determined in the identification unit (6) on the basis of the measuring data of the voltage ($v_1$) influencing over the adjusting unit (2), which is then signalled to the phase angle unit (32), especially to the central controller (10).

12. An improved power regulator according to any of the preceding claims 6 - 11, **characterised in that** the control unit (3) has the identification unit (7) for an inductive load, which includes the voltage comparison unit (71) for comparing the measured voltage value ($v_1$) with a predetermined reference voltage ($v_{threshold}$), the exceeding of which is interpreted as an indication of the inductive load ($K_2$), and which is signalled to the phase angle unit (32), especially to the central controller (10), the change in the regulating mode being performed on the basis of this so that the regulation of the phase angle is transferred from the first regulating unit (321) to the second regulating unit (322).

13. An improved power regulator according to any of the preceding claims 6 - 12, **characterised in that** in connection with the control unit (3) there is provided a current measuring unit (5) for measuring a current ($i_1$) flowing through the adjusting unit (2), the current data being used in the control unit (3), especially in the phase angle unit (32), for controlling the adjusting unit (2).

14. An improved power regulator according to claim 13, **characterised in that** the control unit (3) has a transition sensor (8) for the direction of current, which has a first comparison unit (81) for comparing the consecutive measured current values, by means of which the change in the direction of the current ($i_1$) should be observed, and the observed moment of change in the direction of the current is signalled to the phase angle unit (32), especially the central controller (10) for performing the synchronisation of the phase angle control.

15. An improved power regulator according to any of the preceding claims 6 - 12, **characterised in that** the control unit (3) has a transition sensor (8) for the direction of current, with which the zero-crossing point for the load current ($i_K$) is indicated and which has a first comparison unit (81) for comparing the consecutive measured voltage values comparing a variable direct voltage abs($v_1$), the value of which is a positive voltage ($v_1$) prevailing over the adjusting unit (2) with the predetermined reference voltage ($v_{limit}$), which is a direct voltage and the value of which is positive and near the zero level; on the basis of this comparison, when the variable direct voltage abs($v_1$) exceeds and/or falls below the value for the reference voltage ($v_{limit}$), the zero-crossing point for the load current ($i_K$) is in the vicinity of this point (A, B).

16. An improved power regulator according to any of the preceding claims 6 - 15, **characterised in that** the control unit (3) has the identification unit (9) for a capacitive load, which includes a second comparison unit (91) for comparing each measured current value ($i_1$) with the predetermined limit value for the current ($i_{threshold}$), the exceeding of which is interpreted as an indication of the capacitive load ($K_1$), the exceeding being signalled to the phase angle unit (32), especially the central controller (10), and the change in the regulating mode will be performed on the basis of this so that the regulation of the phase angle is transferred from the second regulating unit (322) to the first (321).

17. A power regulator according to any of the preceding claims 6 - 16, **characterised in that** the phase angle unit (32; 321, 322) has been realised by a microcontroller or a respective data processing unit.

**Patentansprüche**

1. Verbessertes Verfahren zum Regulieren einer Wechselspannung ($V_{AC}$) einer Wechselstromquelle zur Versorgung einer Last (K) mittels Regulierung eines Phasenwinkels ($\varphi$), der auf einen Leistungsregler (1) angewendet wird, aufweisend eine Justiereinheit (2) zum Einstellen des Phasenwinkels ($\varphi$) und seine Steuereinheit (3), wobei in dem Verfahren der Phasenwinkel reguliert werden kann in zwei verschiedenen Weisen zum Ausführen einer Rückwärtsphasensteuerung bzw. einer Vorwärtsphasensteuerung, wobei zwei optionale Zustände einer Polarität für die Justiereinheit (2) bereitgestellt sind, wobei die Einheit elektrisch leitend in entgegengesetzte Richtungen ist, das heißt in die Vorwärtsrichtung und in die Rückwärtsrichtung (a, b) in Bezug auf die Last, wobei der Zustand der Polarität der Einheit und folglich die Richtung der Leitfähigkeit (a, b) synchron mit der Frequenz (f) der Wechselstromquelle ($V_{AC}$) geändert wird und wobei die Änderung in dem Zustand der Polarität ausgeführt wird mit einem gewünschten Phasenwinkel ($\varphi$; $\varphi_1$, $\varphi_2$) während des Zyklus (P) der Wechselstromquelle, so dass

- der Zustand der Polarität der Justiereinheit (2) von der Vorwärtsrichtung (a) zu der Rückwärtsrichtung (b) in Bezug auf die Last (K) geändert wird zum Ausführen der Rückwärtsphasensteuerung, wenn die Wechselspannung ($V_{AC}$) der Wechselstromquelle in dem positiven Halbzyklus (PA) ist und ihr Phasenwinkel ($\varphi$; $\varphi_1$, $\varphi_2$) zwischen 0 und 180 Grad ist, wobei nachfolgend die Änderungen in dem Zustand der Polarität in einer entsprechenden Weise in den nächsten Halbzyklen ausgeführt werden; und
- der Zustand der Polarität der Justiereinheit (2) von der Vorwärtsrichtung (a) zu der Rückwärtsrichtung (b) in Bezug auf die Last geändert wird zum Ausführen der Vorwärtsphasensteuerung, wenn die Wechselspannung ($V_{AC}$) der Wechselstromquelle in dem negativen Halbzyklus (PB) ist und der Phasenwinkel ($\varphi$; $\varphi_1$, $\varphi_2$) zwischen 180 und 360 Grad ist, wobei nachfolgend Änderungen in dem Zustand der Polarität in einer entsprechenden Weise in den nächsten Halbzyklen ausgeführt werden,

**dadurch gekennzeichnet, dass**
der positive (PA) und negative (PB) Halbzyklus der Wechselspannung ($V_{AC}$) der Wechselstromquelle mittels der momentan beeinflussenden Spannung ($v_1$) bestimmt wird, die über der Justiereinheit (2) gemessen wird.

2. Verbessertes Verfahren nach Anspruch 1, **dadurch gekennzeichnet, dass** die Nulldurchgänge des Laststroms ($i_K$) bestimmt werden, so dass eine variable Gleichspannung abs($v_1$), die eingestellt ist, der über die Justiereinheit (2) herrschenden Spannung ($v_1$) mit einem positiven Wert zu folgen, verglichen wird mit einer vorbestimmten Referenzspannung ($v_{limit}$), die eine Gleichspannung ist und deren Wert positiv und nahe des Nullniveaus ist, so dass wenn die variable Gleichspannung abs($v_1$) den Wert für die Referenzspannung ($v_{limit}$) überschreitet und/oder unterschreitet, ein Nulldurchgang (A, B) für den Laststrom ($i_K$) in der Nähe dieses Nulldurchgangs (A, B) sein wird.

3. Verbessertes Verfahren nach einem Anspruch 1 oder 2, **dadurch gekennzeichnet, dass** die Spannung ($v_1$), die über der Justiereinheit (2) herrscht, gemessen und überwacht wird, so dass die Messwerte mit einer voreingestellten zweiten Referenzspannung ($v_{threshhold}$) verglichen werden, und wenn es beobachtet wird, dass die über die Justiereinheit beeinflussende Spannung kurzfristig die voreingestellte zweite Referenzspannung ($v_1 > v_{threshhold}$) überschreitet, die Überschreitung als eine Überspannungsspitze verursacht durch die Last ($K_2$) einer induktiven Art interpretiert wird und der Regulierungsmodus von dem Rückwärtsphasenregulierungsmodus in den Vorwärtsphasenregulierungsmodus geändert wird.

4. Verbessertes Verfahren nach irgend einem der vorhergehenden Ansprüche, **dadurch gekennzeichnet** das der Strom ($i_1$) der durch die Justiereinheit (2) fließt, und zur selben Zeit der Laststrom ($i_K$) gemessen und überwacht wird, so dass die Messwerte verglichen werden mit einem vorbestimmten Stromgrenzwert ($v_{threshhold}$), und wenn es beobachtet wird, dass der gemessene Strom, der durch die Justiereinheit fließt, den Stromgrenzwert ($i_1 > i_{threshold}$)

überschreitet, die Überschreitung als eine Überstromspitze verursacht durch die Last (K$_1$) einer kapazitiven Art interpretiert wird und der Regulierungsmodus von dem Vorwärtsphasenregulierungsmodus in den Rückwärtsphasenregulierungsmodus geändert wird.

5. Verbessertes Verfahren nach Anspruch 4, **dadurch gekennzeichnet, dass** der Strom (ii), der durch die Justiereinheit (2) fließt, und zur selben Zeit der Laststrom (i$_K$) gemessen und überwacht wird mittels solch einem Überstromschutzkreis (12), an dem eine vorbestimmte Überstromgrenze (i$_{overcurrentlimit}$) eingestellt ist, so dass wenn der Strom, der durch die Justiereinheit fließt, beobachtet wird, die Überstromgrenze (i$_1$ > i$_{overcurrentlimit}$) zu überschreiten, dieses als eine Überstromspitze verursacht durch die Last (K$_1$) einer kapazitiven Art interpretiert wird und der vorherrschende Regulierungsmodus von dem Vorwärtsphasenregulierungsmodus zu dem Rückwärtsphasenregulierungsmodus geändert wird, wobei nachfolgend es wieder mittels eines Überstromschutzkreises untersucht wird, ob der Strom, der durch die Justiereinheit fließt, die vorbestimmte Überstromgrenze, die in Verbindung mit dem Überstromschutzkreis eingestellt ist, überschreitet, und wenn die Überstromgrenze nicht überschritten wird, wird der gerade eingestellte Rückwärtsphasenregulierungsmodus beibehalten, und wenn die Überstromgrenze überschritten wird, wird der Überstromschutz in einer bekannten Weise ausgelöst.

6. Verbesserter Leistungsregulator zum Regulieren einer Wechselspannung (V$_{AC}$) einer Wechselstromquelle zur Versorgung einer Last (K) mittels Regulierung eines Phasenwinkels ($\varphi$), wobei der Leistungsregulator (1) eine Justiereinheit (2) zum Einstellen des Phasenwinkels ($\varphi$) und seine Steuereinheit (3) aufweist, wobei der Phasenwinkel in dem Leistungsregulator justierbar ist mittels der Steuereinheit in zwei verschiedenen Weisen zum Ausführen einer Rückwärtsphasen- bzw. einer Vorwärtsphasensteuerung, wobei

a) die Justiereinheit (2) eine Einheit ist, die elektrisch leitend in zwei optionalen Richtungen mit zwei optionalen Zuständen einer Polarität ist, wobei die Justiereinheit elektrisch leitend in entgegengesetzte Richtungen ist, das heißt in die Vorwärtsrichtung und in die Rückwärtsrichtung (a, b) in Bezug auf die Last,
b) wobei die Steuereinheit (3) umfasst:

- eine Änderungseinheit (31) zum Ändern des Zustands der Polarität der Justiereinheit (2) und folglich der Richtung der Leitfähigkeit (a, b) synchron mit der Frequenz (f) der Wechselspannung (V$_{AC}$) der Wechselstromquelle, und
- eine Phasenwinkeleinheit (32) zum wiederholten Ausführen einer Änderung in dem Zustand der Polarität (a, b) in der Justiereinheit (2) mit einem gewünschten Phasenwinkel ($\varphi$; $\varphi_1$, $\varphi_2$) während eines Zyklus von 360 Grad der Wechselstromquelle, wobei die Phasenwinkeleinheit (32) eine Phasenwinkelregulierungseinheit (320), die ausgelegt ist, in zwei Gebieten des Betriebs als erste und zweite Phasenwinkelregulierungseinheit (321, 322) zu funktionieren, und eine zentrale Steuerung (10) beinhaltet zum Steuern und Überwachen des Betriebs der Regulierungseinheit (320; 321, 322), so dass

-- die erste Phasenwinkelregulierungseinheit (321) ausgelegt ist, den Zustand der Polarität (a, b) der Justiereinheit (2) mittels der Änderungseinheit (31) in einen ersten Regulierungsmodus zu ändern, so dass der Zustand der Polarität der Justiereinheit (2) von der Vorwärtsrichtung (a) zu der Rückwärtsrichtung (b) im Bezug auf die Last (K) geändert wird, wenn die Wechselspannung (V$_{AC}$) der Wechselstromquelle in dem positiven Halbzyklus (PA) ist und ihr Phasenwinkel ($\varphi$; $\varphi_1$, $\varphi_2$) zwischen 0 und 180 Grad ist, wobei nachfolgend die Änderungen in dem Zustand der Polarität in einer entsprechenden Weise in den nächsten Halbzyklen zum Ausführen der Rückwärtsphasensteuerung ausgeführt werden; und
- die zweite Phasenwinkelregulierungseinheit (322) ausgelegt ist,

den Zustand der Polarität (a, b) der Justiereinheit (2) mittels der Änderungseinheit (31) in einen zweiten Regulierungsmodus zu ändern, so dass der Zustand der Polarität der Justiereinheit (2) von der Vorwärtsrichtung (a) zu der Rückwärtsrichtung (b) im Bezug auf die Last geändert wird, wenn die Wechselspannung (V$_{AC}$) der Wechselstromquelle in dem negativen Halbzyklus (PB) ist und der Phasenwinkel ($\varphi$; $\varphi_1$, $\varphi_2$) zwischen 180 und 360 Grad ist, wobei nachfolgend die Änderungen in dem Zustand der Polarität in einer entsprechenden Weise in den nächsten Halbzyklen mittels Ausführen der Vorwärtsphasensteuerung ausgeführt werden;
**dadurch gekennzeichnet, dass**
in Verbindung mit der Steuereinheit (3) eine Spannungsmeßeinheit (4) bereitgestellt wird zum Messen der Spannung (v$_1$), die über die Justiereinheit (2) beeinflusst, wobei die Spannungsdaten in der Steuereinheit (3) verwendet werden, insbesondere in der Phasenwinkeleinheit (32), zum Steuern der Justiereinheit (2).

**7.** Verbesserter Leistungsregulator nach Anspruch 6, **dadurch gekennzeichnet, dass** die Justiereinheit (2) realisiert ist mittels mindestens einer Diode (21) und einer Schalteinheit (22; 22a, 22b).

**8.** Verbesserter Leistungsregulator nach Anspruch 6, **dadurch gekennzeichnet, dass** die Justiereinheit (2) realisiert ist mittels zweier Dioden (21a, 21b) und zweier Schalter (23a, 23b), wobei die Dioden in entgegen liegenden Richtungen und in Reihe mit den Schaltern zu parallelen Ästen (30a, 30b) verbunden sind.

**9.** Verbesserter Leistungsregulator nach Anspruch 6, **dadurch gekennzeichnet, dass** die Justiereinheit (2) realisiert ist mittels zweier Dioden (24, 25) mit gegenüberliegenden Richtungen und zwei An/Aus Schaltern (26, 27), wobei die Schalter parallel zu den Dioden angeordnet sind.

**10.** Verbesserter Leistungsregulator nach Anspruch 9, **dadurch gekennzeichnet, dass** die Justiereinheit (2) aus zwei aufeinanderfolgenden verbundenen MOSFET Leistungstransistoren (20a, 20b) hergestellt ist.

**11.** Verbesserter Leistungsregulator nach irgend einem der vorhergehenden Ansprüche 6 bis 10, **dadurch gekennzeichnet, dass** die Steuereinheit (3) eine Identifikationseinheit (6) für die Halbzyklen (PA, PB) der Wechselstromquelle (AC) aufweist, in welcher der positive (PA) und der negative (PB) Halbzyklus der Wechselspannung ($V_{AC}$) identifiziert wird, wobei der vorherrschende Halbzyklus in der Identifikationseinheit (6) auf der Basis der Messdaten der Spannung ($v_1$), die über der Justiereinheit (2) beeinflusst, bestimmt wird, was dann an die Phasenwinkeleinheit (32) insbesondere die zentrale Steuerung (10) signalisiert wird.

**12.** Verbesserter Leistungsregulator nach irgend einem der vorhergehenden Ansprüche 6 bis 11, **dadurch gekennzeichnet, dass** die Steuereinheit (3) die Identifikationseinheit (7) für eine induktive Last aufweist, die die Spannungsvergleichseinheit (71) beinhaltet zum Vergleichen der gemessenen Spannung ($v_1$) mit einer vorbestimmten Referenzspannung ($v_{threshhold}$), wobei ein Überschreiten dieser interpretiert wird als eine Indikation der induktiven Last ($K_2$), was an die Phasenwinkeleinheit (32), insbesondere die zentrale Steuerung (10), signalisiert wird, wobei die Änderung des Regulierungsmodus ausgeführt wird auf der Basis davon, so dass die Regulierung des Phasenwinkels transferiert wird von der ersten Regulierungseinheit (321) zu der zweiten Regulierungseinheit (322).

**13.** Verbesserter Leistungsregulator nach irgend einem der vorhergehenden Ansprüche 6 bis 12, **dadurch gekennzeichnet, dass** in Verbindung mit der Steuereinheit (3) eine Strommeßeinheit (5) bereitgestellt wird zum Messen eines Stroms ($i_1$), der durch die Justiereinheit (2) fließt, wobei die Stromdaten in der Steuereinheit (3), insbesondere in der Phasenwinkeleinheit (32), zum Steuern der Justiereinheit (2) verwendet werden.

**14.** Verbesserter Leistungsregulator nach Anspruch 13, **dadurch gekennzeichnet, dass** die Steuereinheit (3) einen Übergangssensor (8) aufweist für die Richtung des Stroms, der eine erste Vergleicheinheit (81) aufweist zum Vergleichen der nacheinander gemessenen Stromwerte, mittels derer die Änderung in der Richtung des Stroms ($i_1$) beobachtet werden sollte, wobei der beobachtete Moment der Änderung in der Richtung des Stroms an die Phasenwinkeleinheit (32) signalisiert wird, insbesondere an die zentrale Steuerung (10), zum Ausführen der Synchronisation der Phasenwinkelsteuerung.

**15.** Verbesserter Leistungsregulator nach irgend einem der vorhergehenden Ansprüche 6 bis 12, **dadurch gekennzeichnet, dass** die Steuereinheit (3) einen Übergangssensor (8) für die Richtung des Stroms aufweist, mit welchem der Nulldurchgang des Laststroms ($i_K$) indiziert wird und welcher eine erste Vergleicheinheit (81) aufweist zum Vergleichen der aufeinanderfolgend gemessenen Spannungswerte im Vergleich zu einer variablen Gleichspannung abs($v_1$), deren Wert eine positive Spannung ($v_1$) ist, die über die Justiereinheit (2) mit der vorbestimmten Referenzspannung ($v_{limit}$) vorherrscht, die eine Gleichspannung ist und deren Wert positiv und nahe dem Nullniveau ist; auf der Basis dieses Vergleichs ist, wenn die variable Gleichspannung abs($v_1$) den Wert für die Referenzspannung ($v_{limit}$) überschreitet und/oder unterschreitet, der Nulldurchgang für den Laststrom ($i_K$) in der Nähe von diesem Punkt (A, B).

**16.** Verbesserter Leistungsregulator nach irgend einem der vorhergehenden Ansprüche 6 bis 15, **dadurch gekennzeichnet, dass** die Steuereinheit (3) die Identifikationseinheit (9) für eine kapazitive Last aufweist, welche eine zweite Vergleicheinheit (91) beinhaltet zum Vergleichen jedes gemessenen Stromwertes ($i_1$) mit dem vorbestimmten Grenzwert für den Strom ($i_{threshold}$), dessen Überschreiten interpretiert wird als eine Indikation der kapazitiven Last ($K_1$), wobei das Überschreiten an die Phasenwinkeleinheit (32), insbesondere die zentrale Steuerung (10), signalisiert wird und wobei die Änderung in dem Regulierungsmodus ausgeführt wird auf der Basis davon, so dass die Regulierung des Phasenwinkels von der zweiten Regulierungseinheit (322) zu der ersten (321) übertragen wird.

**17.** Leistungsregulator nach irgend einem der vorhergehenden Ansprüche 6 bis 16, **dadurch gekennzeichnet, dass** die Phasenwinkeleinheit (32; 321, 322) mittels eines Mikrocontrollers oder einer entsprechenden Datenverarbeitungseinheit realisiert ist.

**Revendications**

**1.** Procédé amélioré pour réguler une tension alternative ($V_{AC}$) d'une source de courant alternatif à fournir à une charge (K) en régulant un angle de phase ($\varphi$), qui est appliqué à un régulateur de puissance (1) ayant une unité d'ajustement (2) pour établir l'angle de phase ($\varphi$) et son unité de commande (3), procédé dans lequel l'angle de phase peut être régulé de deux façons différentes pour effectuer une commande de phase inverse et une commande de phase vers l'avant, respectivement, dans lequel deux états facultatifs de polarité sont prévus pour l'unité d'ajustement (2), dans lesquels l'unité est électro-conductrice dans des directions opposées, c'est-à-dire dans la direction vers l'avant et la direction inverse (a, b) par rapport à la charge, l'état de polarité de l'unité et ainsi la direction de conductivité (a, b) sont changés en synchronisme avec la fréquence (f) de la source de courant alternatif ($V_{AC}$), et le changement de l'état de polarité est effectué avec un angle de phase souhaité ($\varphi$ ; $\varphi_1$, $\varphi_2$) pendant le cycle (P) de la source de courant alternatif de sorte que

- l'état de polarité de l'unité d'ajustement (2) est changé de la direction vers l'avant (a) vers la direction inverse (b) par rapport à la charge (K) pour effectuer la commande de phase inverse lorsque la tension alternative ($V_{AC}$) de la source de courant alternatif est dans le demi-cycle positif (PA) et son angle de phase ($\varphi$ ; $\varphi_1$, $\varphi_2$) est compris entre 0 et 180 degrés, après quoi les changements dans l'état de polarité seront effectués d'une manière respective dans les demi-cycles suivants ;
- l'état de polarité de l'unité d'ajustement (2) est changé de la direction vers l'avant (a) vers la direction inverse (b) par rapport à la charge pour effectuer la commande de phase vers l'avant, lorsque la tension alternative ($V_{AC}$) de la source de courant alternatif est dans le demi-cycle négatif (PB) et l'angle de phase ($\varphi$ ; $\varphi_1$, $\varphi_2$) est compris entre 180 et 360 degrés, après quoi des changements dans l'état de polarité seront effectués d'une manière respective dans les demi-cycles suivants,

**caractérisé en ce que**
les demi-cycles positif (PA) et négatif (PB) de la tension alternative ($V_{AC}$) de la source de courant alternatif sont identifiés au moyen de la tension d'influence momentanée ($V_1$) mesurée sur l'unité d'ajustement (2).

**2.** Procédé amélioré selon la revendication 1, **caractérisé en ce que** les points de passage par zéro pour le courant de charge ($i_K$) sont déterminés de telle sorte qu'une tension continue variable abs($V_1$), qui est établie pour suivre la tension ($V_1$) qui prévaut sur l'unité d'ajustement (2) avec une valeur positive, est comparée à une tension de référence prédéterminée ($V_{limite}$), qui est une tension continue et dont la valeur est positive et proche du niveau zéro, de sorte que lorsque la tension continue variable abs($V_1$)) dépasse et/ou tombe en dessous de la valeur de la tension de référence ($V_{limite}$), un point de passage par zéro (A, B) pour le courant de charge ($i_K$) sera à proximité de ce point de passage par zéro (A, B).

**3.** Procédé amélioré selon la revendication 1 ou 2, **caractérisé en ce que** la tension ($V_1$) qui prévaut sur l'unité d'ajustement (2) est mesurée et surveillée de sorte que les valeurs de mesure sont comparées à une seconde tension de référence préétablie ($V_{seuil}$), et s'il est observé que la tension influençant l'unité d'ajustement dépasse momentanément la seconde tension de référence prédéterminée ($V_1 > V_{seuil}$), le dépassement est interprété comme un pic de surtension provoqué par la charge ($K_2$) de nature inductive, et le mode de régulation passe du mode de régulation de phase inverse au mode de régulation de phase vers l'avant.

**4.** Procédé amélioré selon l'une quelconque des revendications précédentes, **caractérisé en ce que** le courant ($i_1$) circulant à travers l'unité d'ajustement (2) et, en même temps, le courant de charge ($i_K$) sont mesurés et observés de sorte que les valeurs de mesure sont comparées à la valeur limite de courant prédéterminée ($V_{seuil}$), et s'il est observé que le courant mesuré circulant à travers l'unité d'ajustement dépasse momentanément la valeur limite de courant ($i_1 > i_{seuil}$), le dépassement est interprété comme un pic de surintensité provoqué par la charge ($K_1$) de nature capacitive, et le mode de régulation va changer du mode de régulation de phase vers l'avant au mode de régulation de phase inverse.

**5.** Procédé amélioré selon la revendication 4, **caractérisé en ce que** le courant (il) circulant à travers l'unité d'ajustement (2) et, en même temps, le courant de charge ($i_K$) sont mesurés et observés au moyen d'un circuit de protection

**15**

contre les surintensités (12), pour lequel une limite de surintensité prédéterminée est définie, de manière à ce que lorsque le courant circulant à travers l'unité d'ajustement est observé dépassant la limite de surintensité ($i_{limite}$ de surintensité), cela est interprété comme un pic de surintensité provoqué par la charge ($K_1$) de nature capacitive, et le mode de régulation prévalant est changé du mode de régulation de phase vers l'avant vers le mode de régulation de phase inverse, après quoi il sera à nouveau examiné, au moyen d'un circuit de protection contre les surintensités, si le courant circulant à travers l'unité d'ajustement dépasse la limite de surintensité prédéterminée établie en liaison avec le circuit de protection contre les surintensités, et si la limite de surintensité n'est pas dépassée, le mode de régulation de phase inverse juste établi va être maintenu, et si la limite de surintensité est dépassée, la protection contre les surintensités est déclenchée de manière connue.

6. Régulateur de puissance amélioré pour réguler une tension alternative ($V_{AC}$)) d'une source de courant alternatif à fournir à une charge (K) en régulant un angle de phase ($\varphi$), le régulateur de puissance (1) comprenant une unité d'ajustement (2) pour établir l'angle de phase ($\varphi$) et son unité de commande (3), l'angle de phase dans le régulateur de puissance étant ajustable au moyen de l'unité de commande de deux manières alternatives pour effectuer une commande de phase inverse et de phase vers l'avant, respectivement, dans lequel

    a) l'unité d'ajustement (2) est une unité électro-conductrice dans deux directions facultatives avec deux états de polarité facultatifs, dans lequel l'unité d'ajustement est électro-conductrice dans des directions opposées, c'est-à-dire la direction vers l'avant et la direction inverse (a, b) par rapport à la charge,

    b) l'unité de commande (3) comprend :

        - une unité de changement (31) pour changer l'état de polarité de l'unité d'ajustement (2) et donc la direction de conductivité (a, b) en synchronisme avec la fréquence (f) de la tension alternative ($V_{AC}$) de la source de courant alternatif, et

        - une unité d'angle de phase (32) pour effectuer de manière répétée un changement de l'état de polarité (a, b) dans l'unité d'ajustement (2) avec un angle de phase souhaité ($\varphi$ ; $\varphi_1$, $\varphi_2$) pendant un cycle de 360 degrés de la source de courant alternatif, l'unité d'angle de phase (32) comprenant une unité de régulation d'angle de phase (320) qui est prévue pour fonctionner dans deux zones de fonctionnement en tant que première et seconde unités de régulation d'angle de phase (321, 322), et une commande centrale (10) pour commander et surveiller le fonctionnement de l'unité de régulation (320 ; 321, 322), de sorte que

        - la première unité de régulation d'angle de phase (321) est agencée pour modifier l'état de polarité (a, b) de l'unité d'ajustement (2) au moyen de l'unité de changement (31) dans un premier mode de régulation de sorte que l'état de polarité de l'unité d'ajustement (2) est changé de la direction vers l'avant (a) vers la direction inverse (b) par rapport à la charge (K) lorsque la tension alternative ($V_{AC}$) de la source de courant alternatif est dans le demi-cycle positif (PA), et son angle de phase ($\varphi$ ; $\varphi_1$, $\varphi_2$) est compris entre 0 et 180 degrés, après quoi des changements dans l'état de polarité seront effectués d'une manière respective dans les demi-cycles suivants pour effectuer la commande de phase inverse, et

        - la seconde unité de régulation d'angle de phase (322) est agencée pour changer l'état de polarité (a, b) de l'unité d'ajustement (2) au moyen de l'unité de changement (31) dans un second mode de régulation de sorte que l'état de polarité de l'unité d'ajustement (2) est changé de la direction vers l'avant a vers la direction inverse b par rapport à la charge, lorsque la tension alternative ($V_{AC}$) de la source de courant alternatif se trouve dans le demi-cycle négatif (PB), et l'angle de phase ($\varphi$ ; $\varphi_1$, $\varphi_2$) est compris entre 180 et 360 degrés, après quoi des changements dans l'état de polarité seront effectués d'une manière respective dans les demi-cycles suivants en effectuant la commande de phase avant,

    **caractérisé en ce que**
    en liaison avec l'unité de commande (3) est prévue une unité de mesure de tension (4) pour mesurer la tension ($V_1$) influençant l'unité d'ajustement (2), les données de tension étant utilisées dans l'unité de commande (3), en particulier dans l'unité d'angle de phase (32), pour commander l'unité d'ajustement (2).

7. Régulateur de puissance amélioré selon la revendication 6, **caractérisé en ce que** l'unité d'ajustement (2) est réalisée au moyen d'au moins une diode (21) et d'une unité de commutation (22 ; 22a, 22b).

8. Régulateur de puissance amélioré selon la revendication 6, **caractérisé en ce que** l'unité d'ajustement (2) est réalisée au moyen de deux diodes (21a, 21b) et de deux commutateurs (23a, 23b), les diodes étant connectées dans des directions opposées et en série avec les commutateurs à des jambes parallèles (30a, 30b).

9. Régulateur de puissance amélioré selon la revendication 6, **caractérisé en ce que** l'unité d'ajustement (2) est réalisée au moyen de deux diodes (24, 25) de directions opposées et de deux commutateurs marche/arrêt (26, 27), les commutateurs étant agencés parallèlement aux diodes.

10. Régulateur de puissance amélioré selon la revendication 9, **caractérisé en ce que** l'unité d'ajustement (2) est constituée de deux transistors de puissance MOSFET connectés consécutivement (20a, 20b).

11. Régulateur de puissance amélioré selon l'une quelconque des revendications précédentes 6 à 10, **caractérisé en ce que** l'unité de commande (3) comporte une unité d'identification (6) pour le demi-cycle (PA, PB) de la source de courant alternatif (AC), dans lequel les demi-cycles positif (PA) et négatif (PB) de la tension alternative ($V_{AC}$) sont identifiés, le demi-cycle prévalant étant déterminé dans l'unité d'identification (6) sur la base des données de mesure de la tension ($V_1$) influençant l'unité d'ajustement (2), lequel est ensuite signalé à l'unité d'angle de phase (32), en particulier à la commande centrale (10).

12. Régulateur de puissance amélioré selon l'une quelconque des revendications précédentes 6 à 11, **caractérisé en ce que** l'unité de commande (3) comporte l'unité d'identification (7) pour une charge inductive, qui comprend l'unité de comparaison de tension (71) pour comparer la valeur de tension mesurée ($V_1$) avec une tension de référence prédéterminée ($V_{seuil}$), dont le dépassement est interprété comme une indication de la charge inductive ($K_2$) et lequel est signalé à l'unité d'angle de phase (32), en particulier à la commande centrale (10), le changement du mode de régulation étant effectué sur la base de ceci de sorte que la régulation de l'angle de phase est transférée de la première unité de régulation (321) à la seconde unité de régulation (322).

13. Régulateur de puissance amélioré selon l'une quelconque des revendications précédentes 6 à 12, **caractérisé en ce qu'**en liaison avec l'unité de commande (3) est prévue une unité de mesure de courant (5) pour mesurer un courant ($i_1$) circulant à travers l'unité d'ajustement (2), les données de courant étant utilisées dans l'unité de commande (3), en particulier dans l'unité d'angle de phase (32), pour commander l'unité d'ajustement (2).

14. Régulateur de puissance amélioré selon la revendication 13, **caractérisé en ce que** l'unité de commande (3) comporte un capteur de transition (8) pour la direction du courant, qui a une première unité de comparaison (81) pour comparer les valeurs de courant mesurées consécutives, au moyen duquel le changement de la direction du courant ($i_1$) doit être observé, et le moment de changement observé dans la direction du courant est signalé à l'unité d'angle de phase (32), en particulier la commande centrale (10), pour effectuer la synchronisation de la commande d'angle de phase.

15. Régulateur de puissance amélioré selon l'une quelconque des revendications précédentes 6 à 12, **caractérisé en ce que** l'unité de commande (3) présente un capteur de transition (8) pour la direction de courant, à l'aide duquel le point de passage par zéro pour le courant de charge ($i_K$) est indiqué et qui a une première unité de comparaison (81) pour comparer les valeurs de tension mesurées consécutives en comparant une tension continue variable abs($V_1$), dont la valeur est une tension positive ($V_1$) qui prévaut sur l'unité d'ajustement (2) avec la tension de référence prédéterminée ($V_{limite}$), qui est une tension continue et dont la valeur est positive et proche du niveau zéro ; sur la base de cette comparaison, lorsque la tension continue variable abs($V_1$) dépasse et/ou tombe en dessous de la valeur de la tension de référence ($V_{limite}$), le point de passage par zéro pour le courant de charge ($i_K$) se trouve à proximité de ce point (A, B).

16. Régulateur de puissance amélioré selon l'une quelconque des revendications précédentes 6 à 15, **caractérisé en ce que** l'unité de commande (3) comporte l'unité d'identification (9) pour une charge capacitive, qui comprend une seconde unité de comparaison (91) pour comparer chaque valeur de courant mesurée ($i_1$) avec la valeur limite prédéterminée pour le courant ($i_{seuil}$), dont le dépassement est interprété comme une indication de la charge capacitive ($K_1$), le dépassement étant signalé à l'unité d'angle de phase (32), en particulier la commande centrale (10), et le changement du mode de régulation va être effectué sur la base de ceci de sorte que la régulation de l'angle de phase est transférée de la seconde unité de régulation (322) à la première (321).

17. Régulateur de puissance selon l'une quelconque des revendications précédentes 6 à 16, **caractérisé en ce que** l'unité d'angle de phase (32 ; 321, 322) a été réalisée par une micro-commande ou une unité de traitement de données respective.

FIG. 1

FIG. 2

FIG. 3A

FIG. 3B

FIG. 3C

FIG. 4

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9322826 A
- US 6175195 B
- US 5239255 A
- EP 0923274 A
- US 2001014949 A
- EP 0618667 A
- DE 102004028990 A1